# EUROPÄISCHE PATENTSCHRIFT

(11) **EP 0 795 491 B1**
(45) Veröffentlichungstag und Bekanntmachung des Hinweises auf die Patenterteilung: **05.02.2003**
(21) Anmeldenummer: 97102829.5
(22) Anmeldetag: 21.02.1997
(51) Int. Cl.: B65D 77/20

(54) **Kunststoffbecher mit heissgesiegeltem Deckel**
Plastic cup with heat sealed lid
Gobelet plastique avec couvercle thermosoudé

(30) Priorität: 16.03.1996 DE 19610449
(43) Veröffentlichungstag der Anmeldung: 17.09.1997
(73) Patentinhaber: 4P Rube Göttingen GmbH, D-37077 Göttingen (DE)
(72) Erfinder: Riess, Ludwig, 37120 Bovenden (DE)
(74) Vertreter: Hutzelmann, Gerhard

(56) Entgegenhaltungen:
- EP-A- 0 344 340
- EP-A- 0 355 803
- EP-A- 0 435 638
- DE-A- 3 910 820
- FR-A- 1 573 663
- US-A- 3 934 749

## Beschreibung

Die Erfindung betrifft eine Verpackung aus einem Kunststoffbecher insbesondere aus Polypropylen, mit Siegelrand, sowie einem Deckel aus Kunststoff, zum Aufbringen durch Heißsiegeln auf den Siegelrand des Kunststoffbechers.

Kunstoffbecher werden meist mit Deckeln verschlossen, die als Aluminium-Platinen ausgebildet sind und eine siegelfähige Schicht aufweisen.

Es wurde auch bereits versucht, Kunststoffdeckel einzusetzen, die dann aus PET oder Polystyrol hergestellt wurden, da andere Materialien, wie z.B. Polypropylen bei den notwendigen Siegeltemperaturen von etwa 250°C am Siegelwerkzeug ankleben würden.

Der Erfindung liegt die Aufgabe zugrunde, eine Verpackung vorzuschlagen, deren Deckel möglichst aus dem gleichen Material wie der Becher hergestellt ist und sich problemlos aufsiegeln läßt.

Diese Aufgabe wird erfindungsgemäß dadurch gelöst, daß der Deckel ebenfalls aus Polypropylen besteht und auf seiner dem Siegelwerkzeug zugekehrten und vom Becher abgekehrten Seite mit einer Silikonschicht versehen ist.

Dadurch läßt sich der Deckel - ohne daß die Gefahr des Anhaftens am Siegelwerkzeug besteht - auf den Siegelrand des Bechers aufsiegeln. Becher und Deckel können, da sie aus dem gleichen Material bestehen, ohne weiteres zusammen recycelt werden.

Aus der EP-A-355 803 ist zwar ein Behälter für Analyseproben bekannt, dessen Deckel außen mit einer relativ dicken Schicht aus Silikongummi versehen ist; diese dient jedoch durch ihre selbstheilenden Eigenschaften zum automatischen Wiederverschließen der durch die Probeentnahme entstandenen Löcher.

Eine vorteilhafte Ausgestaltung der Erfindung liegt darin, daß die dem Becher zugekehrte Seite des Kunststoffdeckels mit einer Siegelschicht versehen ist.

Dadurch ist das Siegeln erheblich erleichtert und das Ablösen des Deckels vom Siegelrand kann durch entsprechende Ausgestaltung der Siegelschicht beeinflußt werden.

Für das Aufsiegeln hat es sich als besonders vorteilhaft erwiesen, wenn gemäß einer weiteren Ausgestaltung der Erfindung die dem Deckel zugekehrte Seite des Siegelrandes aufgerauht ist.

Dieses Aufrauhen kann durch Sandstrahlen oder eine Prägung beim Tiefziehen des Bechers erfolgen.

Eine weitere vorteilhafte Ausgestaltung der Erfindung liegt darin, daß der Deckel aus einer Tragschicht aus Polypropylen in einer Stärke von 150 µm bis 400 µm besteht, auf die einerseits eine Siegelschicht in einer Stärke von 20 µm bis 50 µm und andererseits eine Silikonschicht von 0,8 g/m² bis 1,5 g/m² aufgebracht sind.

Mit dieser Ausgestaltung wurden sehr gute Ergebnisse sowohl bezüglich der Siegelung und der Ablösbarkeit der Deckels vom Becherrand erzielt. Darüber hinaus ist der Deckel ausreichend fest um auch mechanischen Beanspruchungen Stand zu halten. Die verhältnismäßig dünne Silikonschicht ist dabei völlig ausreichend um ein Anhaften des Deckels am Siegelwerkzeug wirksam zu unterbinden.

Eine vorteilhafte Ausgestaltung der Erfindung liegt darin, daß der Deckel als ebene Platine ausgebildet ist.

Eine weitere erfindungsgemäße Ausgestaltung liegt darin, daß der Deckel als tiefgezogenes Teil ausgebildet ist.

In der Zeichnung ist die Erfindung anhand von zwei Ausführungsbeispielen veranschaulicht. Dabei zeigen:
- Fig. 1: eine Schnittdarstellung einer Verpackung bestehend aus einem Becher mit Siegelrand und einem darauf aufgesiegelten, als ebene Platine ausgebildeten Deckel und
- Fig.2: einen Schnitt durch einen tiefgezogenen Deckel.

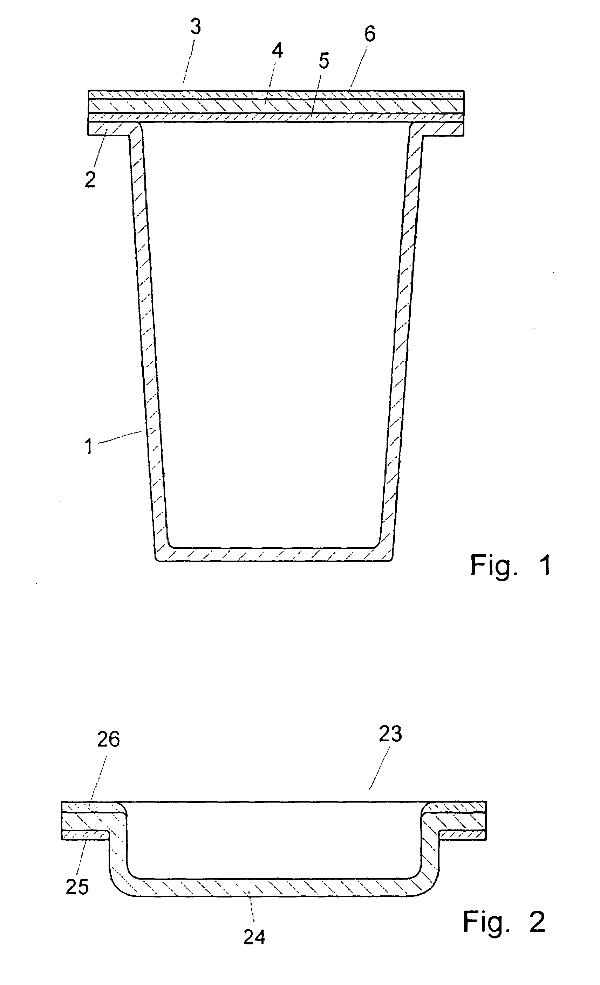

Mit 1 ist in Fig.1 ein aus Polypropylen im Tiefziehverfahren hergestellter Becher bezeichnet, der mit einem umlaufenden Siegelrand 2 versehen ist. Auf diesen Siegelrand 2 ist ein Deckel 3 aufgesiegelt, der aus drei Schichten besteht. Eine Tragschicht 4 dieses Deckels 3 besteht aus Polypropylen, wobei sich je nach Anwendungsfall und Größe des Deckels eine Dicke von 150 bis 400 µm als vorteilhaft erwiesen hat. Auf der dem Siegelrand 2 zugekehrten Seite der Tragschicht 4 ist eine Siegelschicht 5 aufgebracht, die etwa 20 bis 50 µm stark ist. Die vom Becher 1 abgewandte Seite der Tragschicht 3 weist dagegen einen Silikonauftrag 6 auf, dessen Auftragsstärke etwa 0,8 bis 1,5 g/m² beträgt.

Die Tragschicht stellt - wie schon ihr Name sagt - die eigentliche Deckelfolie dar. Die Siegelschicht bewirkt dagegen, daß die Siegelverbindung, die bei etwa 250 °C stattfindet, einerseits haltbar und andererseits aber leicht zu öffnen ist, was mit reinen Polypropylen-Siegelverbindungen nicht zu erzielen ist. Bei diesen Temperaturen am Siegelwerkzeug verhindert die diesem zugewandte Silikonschicht, daß der Deckel am Siegelwerkzeug anhaftet oder gar anklebt.

Beim Ausführungsbeispiel nach Fig.2 ist ein Deckel 23 vor seinem Aufsiegeln tiefgezogen und damit napfartig ausgebildet. Die Beschichtungen auf beiden Seiten einer auch hier vorgesehenen Tragschicht 24 bestehen wieder aus dem gleichen Material wie beim Ausführungsbeispiel nach Fig.1. Beide Beschichtungen 25 und 26 sind jedoch nur im Siegelbereich aufgebracht; d.h., der napfartige innere Bereich besteht nur aus der Tragschicht 24, während der ringförmige Siegelbereich dreilagig ausgebildet ist.

Eine derartige Ausgestaltung ist auch bei einem eben ausgebildeten Deckel, wie er in Fig.1 dargestellt ist, möglich.

Zum Verbessern des Siegelverhaltens ist es zusätzlich möglich, die Siegelfläche des Siegelrandes 2 aufzurauhen, was beispielsweise durch Sandstrahlen erfolgen kann.

## Patentansprüche

1. Verpackung aus einem Kunststoffbecher (1) insbesondere aus Polypropylen, mit Siegelrand (2), und einem Deckel(3,23) aus Kunststoff, zum Aufbringen durch Heißsiegeln auf den Siegelrand, **dadurch gekennzeichnet, daß** der Deckel(3,23) insbesondere aus Polypropylen besteht und auf seiner dem Siegelwerkzeug zugekehrten und vom Becher(1), abgekehrten Seite mit einer Silikonschicht(6,26) versehen ist.

2. Verpackung nach Anspruch 1, **dadurch gekennzeichnet, daß** die dem Becher(1) zugekehrte Seite des Kunststoffdeckels(3,23) mit einer Siegelschicht(5,25) versehen ist.

3. Verpackung nach Anspruch 1 od. 2, d., daß die dem Deckel(3,23) zugekehrte Seite des Siegelrandes(2) aufgerauht ist.

4. Verpackung nach Anspruch 1, 2 od. 3, **dadurch gekennzeichnet, daß** der Deckel(3,23) aus einer Tragschicht(4,24) aus Polypropylen in einer Stärke von 150 µm bis 400 µm besteht, auf die einerseits eine Siegelschicht(5,25) in einer Stärke von 20 µm bis 50 µm und andererseits eine Silikonschicht(6,26) von 0,8 g/m² bis 1,5 g/m² aufgebracht sind.

5. Verpackung nach einem der vorhergehenden Ansprüche, **dadurch gekennzeichnet, daß** der Deckel(3) als ebene Platine ausgebildet ist.

6. Verpackung nach einem der Ansprüche 1 bis 5, **dadurch gekennzeichnet, daß** der Deckel(23) als tiefgezogenes Teil ausgebildet ist.

## Claims

1. Packaging consisting of a plastics pot (1), in particular of polypropylene, with sealing rim (2), and a lid (3, 23) of plastics for application by heat-sealing to the sealing rim, **characterised in that** the lid (3, 23) consists in particular of polypropylene and is provided with a silicone layer (6, 26) on its side facing the sealing tool and remote from the pot (1).

2. Packaging according to claim 1, **characterised in that** the side of the plastics lid (3, 23) facing the pot (1) is provided with a sealing layer (5, 25).

3. Packaging according to claim 1 or 2, **characterised in that** the side of the sealing rim (2) facing the lid (3, 23) is roughened.

4. Packaging according to claim 1, 2 or 3, **characterised in that** the lid (3, 23) consists of a support layer (4, 24) of polypropylene in a thickness of from 150 µm to 400 µm, onto which there are applied on the one hand a sealing layer (5, 25) in a thickness of from 20 µm to 50 µm and on the other hand a silicone layer (6, 26) of from 0.8 g/m² to 1.5 g/m².

5. Packaging according to one of the preceding claims, **characterised in that** the lid (3) takes the form of a flat sheet.

6. Packaging according to one of claims 1 to 5, **characterised in that** the lid (23) takes the form of a thermoformed part.

## Revendications

1. Emballage consistant en un gobelet plastique (1), en particulier en polypropylène, avec un bord de thermosoudage (2), et en un couvercle (3, 23) en plastique, destiné à une application par thermosoudage sur le bord de thermosoudage, **caractérisé en ce que** le couvercle (3, 23) se compose en particulier de polypropylène et est muni d'une couche de silicone (6, 26) sur son côté tourné vers l'outil de thermosoudage et sur son côté détourné du gobelet (1).

2. Emballage selon la revendication 1, **caractérisé en ce que** le côté du couvercle en plastique (3, 23) tourné vers le gobelet (1) est muni d'une couche de thermosoudage (5, 25).

3. Emballage selon la revendication 1 ou 2, **caractérisé en ce que** le côté du bord de thermosoudage (2) tourné vers le gobelet (3, 23) est rendu rugueux.

4. Emballage selon la revendication 1, 2 ou 3, **caractérisé en ce que** le couvercle (3, 23) se compose d'une couche support (4, 24) en polypropylène d'une épaisseur comprise entre 150 µm et 400 µm, sur laquelle est appliquée d'une part une couche de thermosoudage (5, 25) d'une épaisseur comprise entre 20 µm et 50 µm et d'autre part, une couche de silicone (6, 26) d'une épaisseur comprise entre 0,8 g/m² et 1,5 g/m².

5. Emballage selon l'une quelconque des revendications précédentes, **caractérisé en ce que** le couvercle (3) est façonné sous forme de platine plate.

6. Emballage selon l'une des revendications 1 à 5, **caractérisé en ce que** le couvercle (23) est façonné sous forme de partie emboutie.
